# EUROPEAN PATENT APPLICATION

(11) **EP 3 734 509 A1**
(43) Date of publication of application: **04.11.2020**
(21) Application number: 20168255.6
(22) Date of filing: 06.04.2020
(51) Int. Cl.: G06K 9/62

(54) **ARTIFICIAL INTELLIGENCE BASED ANNOTATION FRAMEWORK WITH ACTIVE LEARNING FOR IMAGE ANALYTICS**

(30) Priority: 30.04.2019 US 201916399337
(71) Applicant: General Electric Company, Schenectady, NY 12345 (US)
(72) Inventor: KONWAR, Rajkumar, 560066 Bangalore (IN); ABEDINI, Mani, Dubai (AE)
(74) Representative: Openshaw & Co.

(57) **Abstract**

Systems and techniques for providing an artificial intelligence based annotation framework with active learning for image analytics are presented. In one example, a system annotates training data associated with a set of images for a feature learning process. The system also incrementally updates an analytics artificial intelligence model for an engineering component based on the feature learning process.

## Description

### TECHNICAL FIELD

This disclosure relates generally to artificial intelligence.

### BACKGROUND

Artificial Intelligence (AI) can be employed for classification and/or analysis of digital images for various technologies. In one example, AI can be employed for image recognition. To generate an artificial intelligence model, annotation of training image sets is generally performed. Annotation of a training image set is generally a manual task performed by user. As such, annotation of a training image set using conventional artificial intelligence techniques is generally cumbersome and/or error-prone. Moreover, a less reliable and/or a less accurate artificial intelligence model is generally provided in a scenario where a mistake is made by a user during annotation of a training image set. Furthermore, with conventional artificial intelligence techniques, re-annotation of a training image set and/or re-modeling of an artificial intelligence model may be required. As such, conventional artificial intelligence techniques can be improved.

### SUMMARY

The following presents a simplified summary of the specification in order to provide a basic understanding of some aspects of the specification. This summary is not an extensive overview of the specification. It is intended to neither identify key or critical elements of the specification, nor delineate any scope of the particular implementations of the specification or any scope of the claims. Its sole purpose is to present some concepts of the specification in a simplified form as a prelude to the more detailed description that is presented later.

According to an embodiment, a system includes an annotation component and an active learning component. The annotation component annotates training data associated with a set of images for a feature learning process. The active learning component incrementally updates an analytics artificial intelligence model for an engineering component based on the feature learning process.

According to another embodiment, a method is provided. The method comprises annotating training data associated with a set of images for a feature learning process. The method also comprises incrementally updating an artificial intelligence model for an engineering component based on the feature learning process.

According to yet another embodiment, a computer readable storage device is provided. The computer readable storage device comprises instructions that, in response to execution, cause a system comprising a processor to perform operations, comprising annotating training data associated with a set of images for a feature learning process. The processor also performs operations, comprising incrementally updating an artificial intelligence model for an engineering component based on the feature learning process. The processor also performs operations, comprising providing the artificial intelligence model to a display device to display information associated with the artificial intelligence model in a human-interpretable format.

The following description and the annexed drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Numerous aspects, implementations, objects and advantages of the present invention will be apparent upon consideration of the following detailed description, taken in conjunction with the accompanying drawings, in which like reference characters refer to like parts throughout, and in which:
FIG. 1 illustrates a high-level block diagram of an example artificial intelligence component, in accordance with various aspects and implementations described herein;
FIG. 2 illustrates a high-level block diagram of another example artificial intelligence component, in accordance with various aspects and implementations described herein;
FIG. 3 illustrates an example system associated with an artificial intelligence based annotation framework with active learning for image analytics, in accordance with various aspects and implementations described herein;
FIG. 4 illustrates another example system associated with an artificial intelligence based annotation framework with active learning for image analytics, in accordance with various aspects and implementations described herein;
FIG. 5 illustrates yet another example system associated with an artificial intelligence based annotation framework with active learning for image analytics, in accordance with various aspects and implementations described herein;
FIG. 6 illustrates yet another example system associated with an artificial intelligence based annotation framework with active learning for image analytics, in accordance with various aspects and implementations described herein;
FIG. 7 illustrates an example user interface associated with an artificial intelligence based annotation framework with active learning for image analytics, in accordance with various aspects and implementations described herein;
FIG. 8 depicts a flow diagram of an example method for providing an artificial intelligence based annotation framework with active learning for image analytics, in accordance with various aspects and implementations described herein;
FIG. 9 is a schematic block diagram illustrating a suitable operating environment; and
FIG. 10 is a schematic block diagram of a sample-computing environment.

### DETAILED DESCRIPTION

Various aspects of this disclosure are now described with reference to the drawings, wherein like reference numerals are used to refer to like elements throughout. In the following description, for purposes of explanation, numerous specific details are set forth in order to provide a thorough understanding of one or more aspects. It should be understood, however, that certain aspects of this disclosure may be practiced without these specific details, or with other methods, components, materials, etc. In other instances, well-known structures and devices are shown in block diagram form to facilitate describing one or more aspects.

Systems and techniques that provide an artificial intelligence (AI) based annotation framework with active learning for image analytics are presented. For example, the AI based annotation framework disclosed herein can be a digital framework and/or an interactive framework for image annotation. The AI based annotation framework disclosed herein can also generate an analytic model (e.g., an AI analytic model) and/or can incrementally update an analytic model through an active learning component for image analytics. In an aspect, the AI based annotation framework disclosed herein can generate an analytic model (e.g., an AI analytic model) without employing previously generated annotations. In another aspect, the AI based annotation framework disclosed herein can incrementally update of an analytic model (e.g., an AI analytic model) without discarding one or more portions of the analytic model (e.g., an AI analytic model) and/or previously generated data associated with the analytic model. In an embodiment, an interface can be provided where image annotation for a training set can be performed for a given feature. In another embodiment, the AI based annotation framework disclosed herein can instantiate an active learning component available in a system associated with the AI based annotation framework. In another embodiment, the AI based annotation framework disclosed herein can connects to an active learning component available on a server. In certain embodiments, feedback can be provided to an active analytic model during an annotation process to facilitate incremental learning and/or unlearning. In certain embodiments, the AI based annotation framework disclosed herein can connect to a database (e.g., a data-lake), a server and/or a system to push or pull a new analytic model (e.g., a new analytic AI model). Furthermore, the new analytic model (e.g., the new analytic AI model) can be updated. To update an analytic model (e.g., an analytic AI model), a training set (e.g., a new training set or a previously generated training set) can be annotated to allow the analytic model to learn from the training set. In certain embodiments, multiple users can connect to the AI based annotation framework to facilitate simultaneous annotation and/or updating of an analytic model (e.g., an analytic AI model). In another embodiment, the AI based annotation framework can select on optimal analytic model from the simultaneous annotation and/or updating associated with the multiple users. In certain embodiments, a current version of an analytic model (e.g., an analytic AI model) can be employed to provide one or more predictions and/or to assist during an annotation process. In certain embodiments, the AI based annotation framework disclosed herein can display information associated with annotations for an analytic model (e.g., an analytic AI model) to facilitate an active learning process for the analytic model. As such, incremental learning for an artificial intelligence model can be provided. Annotation associated with an analytic model (e.g., an analytic AI model) can also be improved. The incremental learning can also alleviate a need to re-annotate a training image set and/or re-model an artificial intelligence model. Furthermore, quality and/or effectiveness of an analytic model (e.g., an analytic AI model) can be improved. Automated construction of an artificial intelligence model and/or automated annotation for training an artificial intelligence model can also be provided. Moreover, performance and/or efficiency of one or more processors that generate an analytic model (e.g., an analytic AI model) associated with image data can be improved.

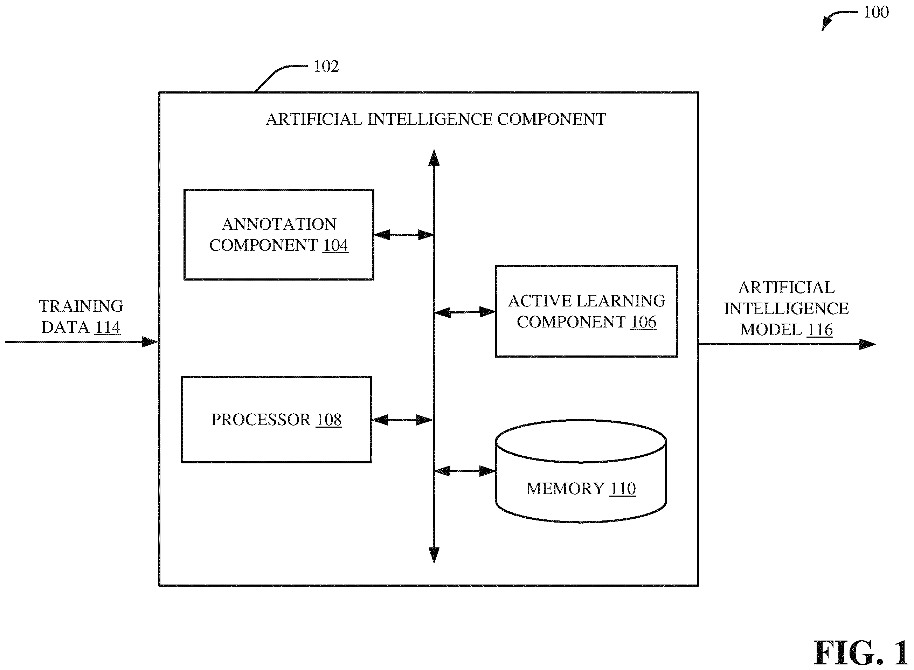

Referring initially to FIG. 1, there is illustrated an example system 100 that provides an AI based annotation framework with active learning for image analytics, according to one or more embodiments of the subject disclosure. The system 100 can be employed by various systems, such as, but not limited to engineering systems, engineering component systems, equipment systems, aviation systems, engine systems, aircraft systems, automobile systems, water craft systems, industrial equipment systems, asset systems, industrial systems, manufacturing systems, factory systems, energy management systems, power grid systems, water supply systems, transportation systems, healthcare systems, medical device systems, medical imaging systems, medical diagnostic systems, medical systems, medical modeling systems, enterprise imaging solution systems, advanced diagnostic tool systems, simulation systems, image management platform systems, care delivery management systems, refinery systems, media systems, financial systems, data-driven prognostics systems, diagnostics systems, digital systems, artificial intelligence systems, machine learning systems, neural network systems, modeling systems, network systems, computer network systems, communication systems, mechanical systems, machine systems, device systems, cloud-based systems, heating systems, heating, ventilation and air conditioning (HVAC) systems, enterprise systems, and the like. Moreover, the system 100 and/or the components of the system 100 can be employed to use hardware and/or software to solve problems that are highly technical in nature (e.g., related to processing digital data, related to processing imaging data, related to artificial intelligence, related to artificial intelligence modeling, etc.), that are not abstract and that cannot be performed as a set of mental acts by a human.

The system 100 can include an artificial intelligence component 102 that can include an annotation component 104 and an active learning component 106. Aspects of the systems, apparatuses or processes explained in this disclosure can constitute machine-executable component(s) embodied within machine(s), e.g., embodied in one or more computer readable mediums (or media) associated with one or more machines. Such component(s), when executed by the one or more machines, e.g., computer(s), computing device(s), virtual machine(s), etc. can cause the machine(s) to perform the operations described. The system 100 (e.g., the artificial intelligence component 102) can include memory 110 for storing computer executable components and instructions. The system 100 (e.g., the artificial intelligence component 102) can further include a processor 108 to facilitate operation of the instructions (e.g., computer executable components and instructions) by the system 100 (e.g., the artificial intelligence component 102).

The artificial intelligence component 102 (e.g., the annotation component 104 of the artificial intelligence component 102) can receive training data 114. The training data 114 can be, for example, a training set associated with a set of images for a feature learning process. In an embodiment, the training data 114 can be employed to train an artificial intelligence network (e.g., an artificial intelligence model). For example, the training data 114 can be employed to train a neural network. In certain embodiments, the training data 114 can be associated with a set of weights from a pre-trained model. The set of images can include one or more digital images. The set of images can be two-dimensional imaging data and/or three-dimensional imaging data generated by one or more imaging devices. For instance, the set of images can be imagery captured via a set of sensors (e.g., a set of sensors associated with an imaging device). In certain embodiments, the set of images can be a series of imagery captured via a set of sensors (e.g., a set of sensors associated with an imaging device) during an interval of time. The set of images can be received directly from one or more imaging devices. Alternatively, the set of images can be stored in one or more databases that receives and/or stores the set of images. In an embodiment, the set of images can be a set of images associated with one or more engineering components. For example, the one or more engineering components can be one or more mechanical components and/or one or more electrical components related to an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a blade for an aircraft, a combustion system, a medical device system, medical imaging system, and/or another system. In another non-limiting embodiment, the set of images can be medical imaging data. For example, the set of images can be two-dimensional medical imaging data and/or three-dimensional medical imaging data generated by one or more medical imaging devices. In example, the set of images can be electromagnetic radiation imagery captured via a set of sensors (e.g., a set of sensors associated with a medical imaging device). In certain embodiments, the set of images can be a series of electromagnetic radiation imagery captured via a set of sensors (e.g., a set of sensors associated with a medical imaging device) during an interval of time. In another example, the set of images can be positron emission tomography (PET) scan imagery. In yet another example, the set of images can be magnetic resonance imaging (MRI) data. A medical imaging device can be, for example, an x-ray device, a computed tomography (CT) device, a PET scanner device, an MRI device, another type of medical imaging device, etc.

In an embodiment, the annotation component 104 can annotate one or more portions of the training data 114. For instance, the feature learning process can include an annotation process to facilitate learning one or more features associated with the set of images. Furthermore, the annotation component 104 can perform the annotation process to label one or more portions of the set of images associated with the training data 114. In an aspect, the annotation component 104 can generate one or more image-level annotations and/or one or more pixel-level annotations for the set of images associated with the training data 114. In another aspect, the annotation component 104 can annotate one or more regions of interest for the set of images associated with the training data 114. The annotation component 104 can employ a bounding box, for example, to annotate a portion of an image associated with the training data 114. In another example, the annotation component 104 can employ a free-form shape to annotate a portion of an image associated with the training data 114. In yet another example, the annotation component 104 can label one or more pixels of an image associated with the training data 114 to annotate the image. In yet another example, the annotation component 104 can employ one or more masks to label one or more pixels of an image associated with the training data 114. For instance, an annotation can represent a pass label or a fail label. In an aspect, an annotation can indicate whether or not an area of interest for an engineering component includes a defect. For example, an annotation can indicate whether an area of interest for an engineering component is an area that includes a defect (e.g., a crack, etc.) or an area that is normal (e.g., without a defect). In certain embodiments, an annotation generated by the annotation component 104 can label (e.g., classify) an area of interest for an image associated with the training data 114. A label can be, for example, a first classification (e.g., a first classification label) or a second classification (e.g., a second classification label). In one example, an annotation generated by the annotation component 104 can correspond to a "pass" label for one or more portions of an image associated with the training data 114 or a "fail" label for the one or more portions of the image.

The active learning component 106 can incrementally update an artificial intelligence model 116 associated with the training data 114 based on the feature learning process. For instance, the active learning component 106 can incrementally update the artificial intelligence model 116 based on one or more annotations for the set of images. The artificial intelligence model 116 can be an analytics artificial intelligence model, for example. Furthermore, in certain embodiments, the artificial intelligence model 116 can be a training model to facilitate identifying one or more defects and/or one or more abnormalities in an image. In an example, the active learning component 106 can incrementally update the artificial intelligence model 116 for one or more engineering components based on the feature learning process. For instance, the artificial intelligence model 116 can be an artificial intelligence model for one or more mechanical components and/or one or more electrical components related to an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a combustion system, a medical device system, medical imaging system, and/or another system. The active learning component 106 can incrementally update the artificial intelligence model 116 by repeatedly updating the artificial intelligence model during the annotation process. For instance, the active learning component 106 can update the artificial intelligence model 116 two or more times during the annotation process. In an embodiment, the active learning component 106 can incrementally update the artificial intelligence model 116 based on user feedback. For example, the active learning component 106 can determine whether an annotation provided by a user is correct. In another example, a user can provide feedback associated with a determination as to whether an annotation generated by the active learning component 106 is correct. In certain embodiments the active learning component 106 can evaluate performance and/or accuracy of an annotation provided by a first user based on feedback provided by a second user. In certain embodiments the active learning component 106 can evaluate performance and/or accuracy of an annotation provided by a user based on analysis of the artificial intelligence model 116 associated with the annotation.

In certain embodiments, the annotation component 104 can pre-screen the set of images associated with the training data 114. For instance, the annotation component 104 can separate images from the set of images into categories. Furthermore, the annotation component 104 can evaluate an annotation for an image based on a category associated with the image. As such, the active learning component 106 can personalize an annotation process for a user based on historical performance of the user, a determined strength/weakness of annotation by the user, etc. The active learning component 106 can also determine an annotation characteristic for a user to improve based on the evaluation of annotations based on categories. In certain embodiments, the active learning component 106 can determine a confidence score for an annotation generated by a user and/or the active learning component 106. Furthermore, the active learning component 106 can update the artificial intelligence model 116 based on one or more confidence scores associated with one or more annotations. For instance, the one or more confidence scores associated with one or more annotations can be employed during a training process for the artificial intelligence model 116. In an example, a higher confidence score for an annotation can correspond to a greater weight value for training and/or updating the artificial intelligence model 116 than a lower confidence score for the annotation. In certain embodiments, the active learning component 106 can configure a reviewing process for an annotation. For example, the active learning component 106 can modify a reviewing process based on performance and/or a confidence level for a user. In another example, the active learning component 106 can determine whether an annotation generated by the active learning component 106 should be presented to a user and/or annotated a second time by a user. In certain embodiments, the active learning component 106 can configure the annotation process based on performance of a corresponding training phase and/or performance of one or more previous annotations during the annotation process.

In certain embodiments, the active learning component 106 can incrementally update the artificial intelligence model 116 via a first modeling process. For instance, the first modeling process can generate a first version of the artificial intelligence model 116. In one example, the first modeling process can be associated with a first set of annotations associated with a first user (e.g., a first user identity) for the training data 114. Furthermore, the active learning component 106 can incrementally update the artificial intelligence model 116 via a second modeling process. For instance, the second modeling process can generate a second version of the artificial intelligence model 116. In one example, the second modeling process can be associated with a second set of annotations associated with a second user (e.g., a second user identity) for the training data 114. In an aspect, the first modeling process can simultaneously update the artificial intelligence model 116 with respect to the second modeling process. For example, the first modeling process can generate the first version of the artificial intelligence model 116 approximately in parallel to the second modeling process generating the second version of the artificial intelligence model 116. In another aspect, the active learning component 106 can select, for storage in a data store associated with a server, the first version of the artificial intelligence model 116 associated with the first modeling process or the second version of the artificial intelligence model 116 associated with the second modeling process. For example, the active learning component 106 can select an optimal version of the artificial intelligence model 116 from the first version of the artificial intelligence model 116 associated with the first modeling process and the second version of the artificial intelligence model 116 associated with the second modeling process.

In certain embodiments, to facilitate generation of the artificial intelligence model 116 and/or updating the artificial intelligence model 116, the active learning component 106 can perform learning with respect to the training data 114 and/or the annotation process. The active learning component 106 can also generate inferences with respect to the training data 114 and/or the annotation process. The active learning component 106 can, for example, employ principles of artificial intelligence to facilitate learning and/or generating inferences with respect to the training data 114 and/or the annotation process. The active learning component 106 can perform learning with respect to the training data 114 and/or the annotation process explicitly or implicitly. Additionally or alternatively, the active learning component 106 can also employ an automatic classification system and/or an automatic classification process to facilitate learning and/or generating inferences with respect to the training data 114 and/or the annotation process. For example, the active learning component 106 can employ a probabilistic and/or statistical-based analysis to learn and/or generate inferences with respect to the training data 114 and/or the annotation process. The active learning component 106 can employ, for example, a support vector machine (SVM) classifier to learn and/or generate inferences with respect to the training data 114 and/or the annotation process. Additionally or alternatively, the active learning component 106 can employ other classification techniques associated with Bayesian networks, decision trees and/or probabilistic classification models. Classifiers employed by the active learning component 106 can be explicitly trained (e.g., via a generic training data) as well as implicitly trained (e.g., via observing user behavior, receiving extrinsic information). For example, with respect to SVM's that are well understood, SVM's are configured via a learning phase or training phase within a classifier constructor and feature selection module. A classifier is a function that maps an input attribute vector, x = (xl, x2, x3, x4, xn), to a confidence that the input belongs to a class - that is, f(x) = confidence(class). The active learning component 106 can also employ, in certain implementations, historical data in addition to the training data 114 and/or data associated with the annotation process.

In an aspect, the active learning component 106 can include an inference component that can further enhance automated aspects of the active learning component 106 utilizing in part inference-based schemes to facilitate learning and/or generating inferences with respect to the training data 114 and/or the annotation process. The active learning component 106 can employ any suitable machine-learning based techniques, statistical-based techniques and/or probabilistic-based techniques. For example, the active learning component 106 can employ expert systems, fuzzy logic, SVMs, Hidden Markov Models (HMMs), greedy search algorithms, rule-based systems, Bayesian models (e.g., Bayesian networks), neural networks, other non-linear training techniques, data fusion, utility-based analytical systems, systems employing Bayesian models, etc. In another aspect, the active learning component 106 can perform a set of machine learning computations associated with the training data 114 and/or the annotation process. For example, the active learning component 106 can perform a set of clustering machine learning computations, a set of decision tree machine learning computations, a set of instance-based machine learning computations, a set of regression machine learning computations, a set of regularization machine learning computations, a set of rule learning machine learning computations, a set of Bayesian machine learning computations, a set of deep Boltzmann machine computations, a set of deep belief network computations, a set of convolution neural network computations, a set of stacked auto-encoder computations and/or a set of different machine learning computations.

It is to be appreciated that technical features of the artificial intelligence component 102 are highly technical in nature and not abstract ideas. Processing threads of the artificial intelligence component 102 that analyze the training data 114, generate the artificial intelligence model 116, etc. cannot be performed by a human (e.g., are greater than the capability of a single human mind). For example, the amount of the training data 114 processed, the speed of processing of the training data 114 and/or the data types of the training data 114 processed by the artificial intelligence component 102 over a certain period of time can be respectively greater, faster and different than the amount, speed and data type that can be processed by a single human mind over the same period of time. Furthermore, the training data 114 processed by the artificial intelligence component 102 can be one or more images generated by sensors of an image capturing device. Moreover, the artificial intelligence component 102 can be fully operational towards performing one or more other functions (e.g., fully powered on, fully executed, etc.) while also processing the training data 114.

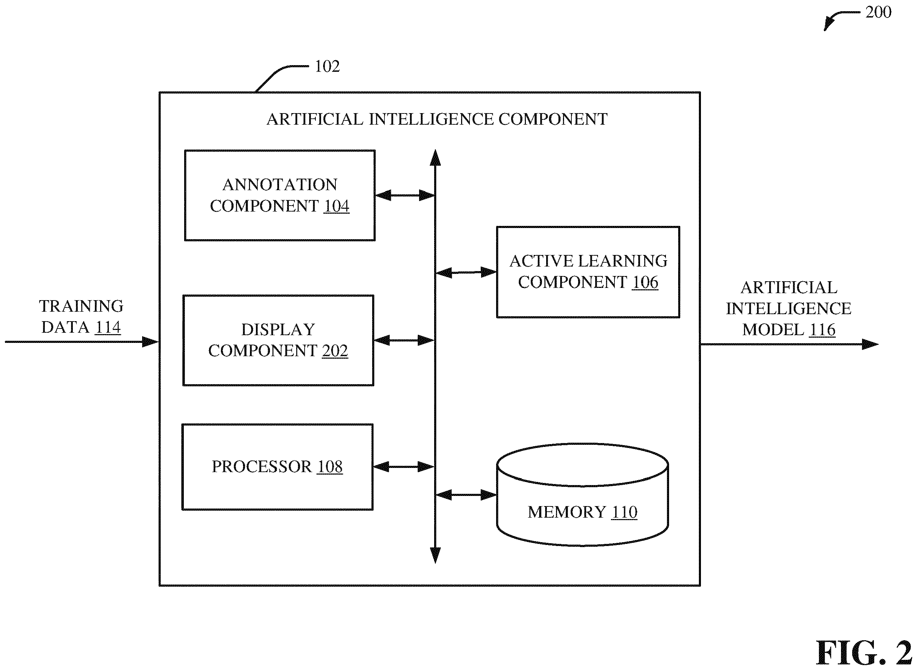

Referring now to FIG. 2, there is illustrated a non-limiting implementation of a system 200 in accordance with various aspects and implementations of this disclosure. Repetitive description of like elements employed in other embodiments described herein is omitted for sake of brevity. The system 200 includes the artificial intelligence component 102. In the embodiment shown in FIG. 2, the artificial intelligence component 102 can include the annotation component 104, the active learning component 106, the processor 108, the memory 110 and/or a display component 202. The display component 202 can provide the training data 114 to a display device to display information associated with the training data 114 in a human-interpretable format. Additionally or alternatively, the display component 202 can provide the artificial intelligence model 116 and/or information associated with the artificial intelligence model 116 to a display device to display the artificial intelligence model 116 and/or the information associated with the artificial intelligence model 116 in a human-interpretable format. The display component 202 can, for example, render the training data 114, the artificial intelligence model 116 and/or information associated with the artificial intelligence model 116 on a user interface associated with a display device. The display device can be a user device such as, but not limited to, a computing device, a computer, a desktop computer, a laptop computer, a monitor device, a smart device, a smart phone, a mobile device, a handheld device, a tablet device, a portable computing device, a wearable device, a virtual reality device or another type of display device associated with a user interface. In an aspect, the display component 202 can alter visual characteristics (e.g., color, size, hues, shading, etc.) of at least a portion of the training data 114, the artificial intelligence model 116 and/or information associated with the artificial intelligence model 116. For example, the display component 202 can alter visual characteristics (e.g., color, size, hues, shading, etc.) of at least a portion of the training data 114, the artificial intelligence model 116 and/or information associated with the artificial intelligence model 116 based on one or more annotations associated with the set of images. In another aspect, the display component 202 can allow a user to zoom into or out with respect to the training data 114, the artificial intelligence model 116 and/or information associated with the artificial intelligence model 116. For example, the display component 202 can allow a user to zoom into or out with respect to an annotation associated with the training data 114, the artificial intelligence model 116 and/or information associated with the artificial intelligence model 116. As such, a user can view, analyze and/or interact with the training data 114, the artificial intelligence model 116 and/or information associated with the artificial intelligence model 116.

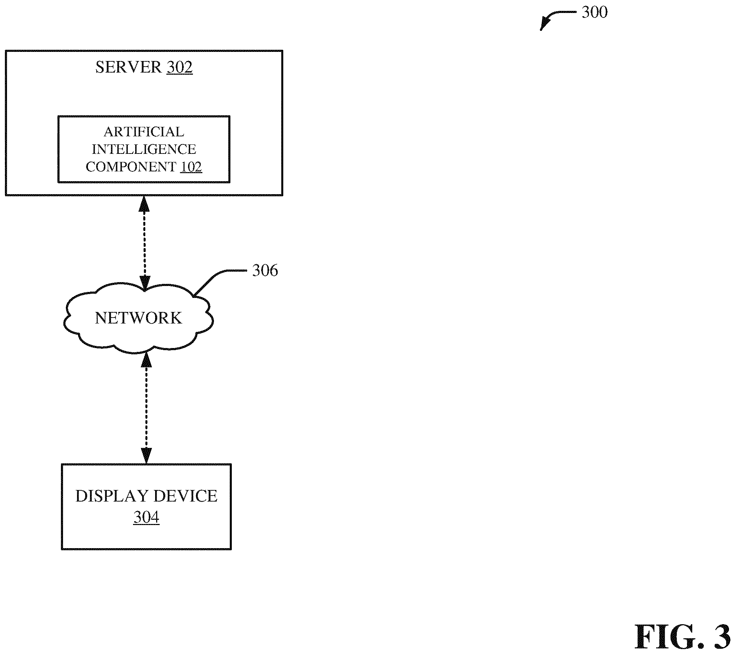

Referring now to FIG. 3, there is illustrated a non-limiting implementation of a system 300 in accordance with various aspects and implementations of this disclosure. Repetitive description of like elements employed in other embodiments described herein is omitted for sake of brevity. The system 300 includes a server 302 and a display device 304. The server 302 can include the artificial intelligence component 102 that includes the annotation component 104, the active learning component 106, the processor 108, the memory 110 and/or the display component 202. As such, in certain embodiments, the annotation component 104, the active learning component 106, and/or the display component 202 can be implemented on the server 302. In an alternate embodiment, the active learning component 106 can be implemented on the server 302 and the annotation component 104 can be implemented on the display device 304. The display device 304 can be in communication with the server 302 (e.g., in communication with the artificial intelligence component 102) via a network 306. The network 306 can be a communication network, a wireless network, a wired network, an internet protocol (IP) network, a voice over IP network, an internet telephony network, a mobile telecommunications network and/or another type of network. The display device 304 can be a user device such as, but not limited to, a computing device, a computer, a desktop computer, a laptop computer, a monitor device, a smart device, a smart phone, a mobile device, a handheld device, a tablet device, a portable computing device, a wearable device, a virtual reality device or another type of display device associated with a user interface. In certain embodiments, the display component 202 of the artificial intelligence component 102 can provide the training data 114, the artificial intelligence model 116 and/or information associated with the artificial intelligence model 116 to the display device 304 to display the artificial intelligence model 116 and/or the information associated with the artificial intelligence model 116 in a human-interpretable format via a user interface of the display device 304. In certain embodiments, a user can provide one or more annotations for one or more images associated with the training data 114 and/or the artificial intelligence model 116 via a user interface of the display device 304. In certain embodiments, the display device 304 can be two or more display devices associated with at least a first user (e.g., a first user that provides one or more annotations) and a second user (e.g., a second user that reviews one or more annotations).

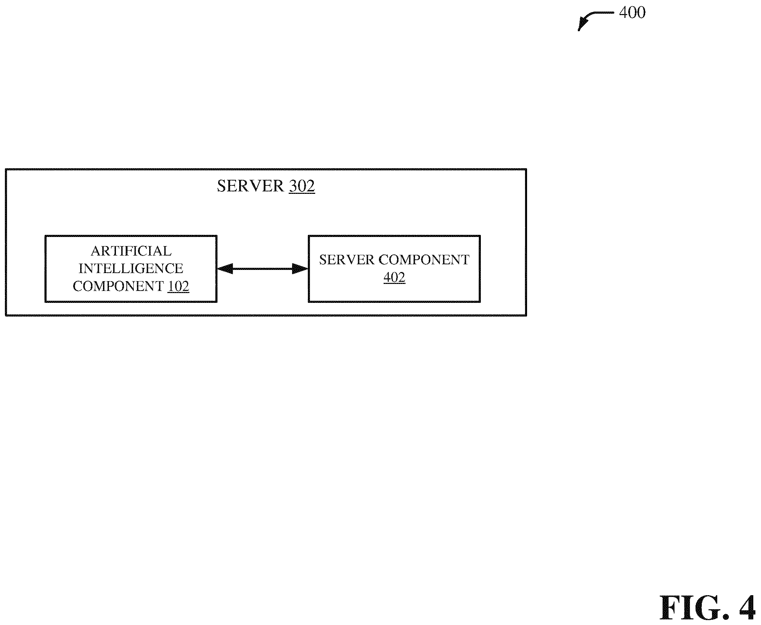

Referring now to FIG. 4, there is illustrated a non-limiting implementation of a system 400 in accordance with various aspects and implementations of this disclosure. Repetitive description of like elements employed in other embodiments described herein is omitted for sake of brevity. The system 400 includes the server 302. In the embodiment shown in FIG. 4, the server 302 can include the artificial intelligence component 102 and a server component 402. The artificial intelligence component 102 can include the annotation component 104, the active learning component 106, the processor 108, the memory 110 and/or the display component 202. Furthermore, in certain embodiments, server 302 (e.g., the artificial intelligence component 102 and/or the server component 402) can be in communication with the display device 304 via the network 306. The server component 402 can be in communication with the artificial intelligence component 102. For example, the server component 402 can be in communication with the annotation component 104, the active learning component 106, and/or the display component 202. In an embodiment, the server component 402 can store the artificial intelligence model 116. For example, the active learning component 106 can transmit the artificial intelligence model 116 to the server component 402. In another example, the active learning component 106 can incrementally update a version of the artificial intelligence model 116 stored by the server component 402. In certain embodiments, the annotation component 104 can annotate the training data 114 based on data received by the server component 402. For example, the annotation component 104 can annotate the training data 114 based on data associated with the artificial intelligence model 116 stored by the server component 402.

In certain embodiments, the active learning component 106 can incrementally update the artificial intelligence model 116 via a first modeling process. For instance, the first modeling process can generate a first version of the artificial intelligence model 116. In one example, the first modeling process can be associated with a first set of annotations associated with a first user (e.g., a first user identity) for the training data 114. Furthermore, the active learning component 106 can incrementally update the artificial intelligence model 116 via a second modeling process. For instance, the second modeling process can generate a second version of the artificial intelligence model 116. In one example, the second modeling process can be associated with a second set of annotations associated with a second user (e.g., a second user identity) for the training data 114. In an aspect, the first modeling process can simultaneously update the artificial intelligence model 116 with respect to the second modeling process. For example, the first modeling process can generate the first version of the artificial intelligence model 116 approximately in parallel to the second modeling process generating the second version of the artificial intelligence model 116. In another aspect, the active learning component 106 can select, for storage by the server component 402, the first version of the artificial intelligence model 116 associated with the first modeling process or the second version of the artificial intelligence model 116 associated with the second modeling process. For example, the active learning component 106 can select an optimal version of the artificial intelligence model 116 (e.g., from the first version of the artificial intelligence model 116 associated with the first modeling process and the second version of the artificial intelligence model 116 associated with the second modeling process) for storage by the server component 402. As such, in certain embodiments, the server component 402 can store an optimal version of the artificial intelligence model 116and/or a most recent version of the artificial intelligence model 116.

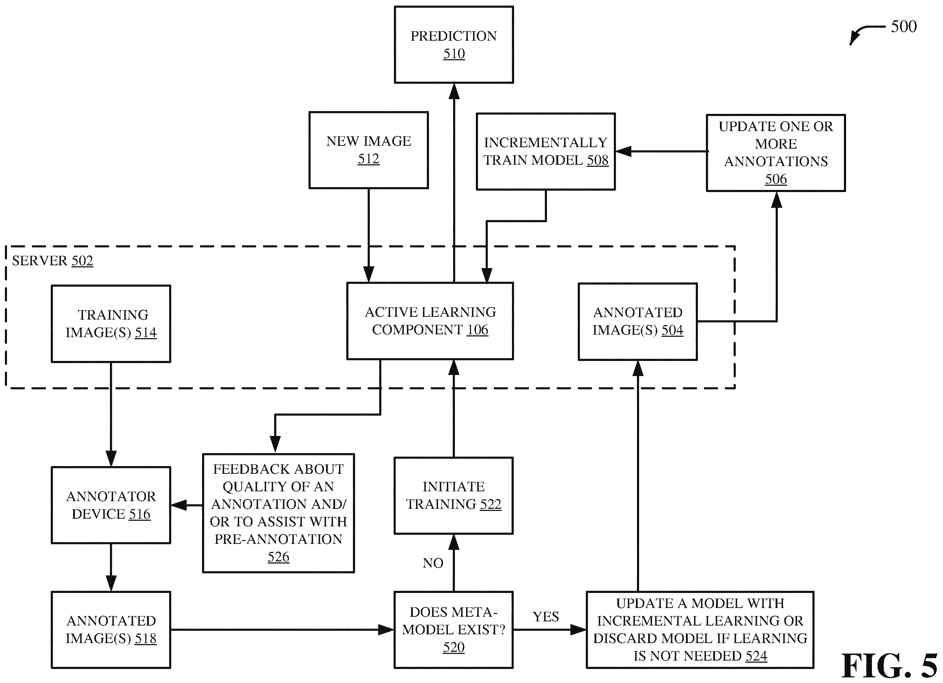

Referring now to FIG. 5, there is illustrated a non-limiting implementation of a system 500 in accordance with various aspects and implementations of this disclosure. Repetitive description of like elements employed in other embodiments described herein is omitted for sake of brevity. The system 500 includes a server 502. In certain embodiments, the server 502 can correspond to the server 302. The server 502 can include at least the active learning component 106 of the artificial intelligence component 102. In certain embodiments, the server 502 can additionally include the annotation component 104 and/or the display component 202. The server 502 can also include one or more annotated images 504. The one or more annotated images 504 can be one or more annotations for the set of images associated with the training data 114. In an embodiment, a process 506 can be performed to update one or more annotations associated with the one or more annotated images 504. Furthermore, a process 508 can be performed to incrementally train a model. For example, the process 508 can incrementally train the artificial intelligence model 116. Information associated with the process 508 (e.g., the incremental training of the model) can be employed by the active learning component 106 to generate a prediction 510 for a new image 512. The new image 512 can be, for example, a new raw image. Furthermore, the new image 512 can be a new image associated with an engineering component. For example, the new image 512 can be a new image associated with one or more mechanical components and/or one or more electrical components related to an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a blade for an aircraft, a combustion system, a medical device system, medical imaging system, and/or another system. The prediction 510 can be a prediction as to whether an area of interest for the new image 512 includes a defect or not. For example, the prediction 510 can predict whether an area of interest for the new image 512 is an area that includes a defect (e.g., a crack, etc.) or an area that is normal (e.g., without a defect). In certain embodiments, the prediction 510 can label (e.g., classify) an area of interest for the new image 512. The label associated with the prediction 510 can be, for example, a first classification (e.g., a first classification label) or a second classification (e.g., a second classification label) for the new image 512. In one example, the prediction 510 can provide a "pass" label prediction or a "fail" label prediction for one or more portions of the new image 512.

In another embodiment, the server 502 can store one or more training images 514. The one or more training images 514 can be one or more images for training an artificial intelligence model. For example, the one or more training images 514 can be included in the training data 114 and/or can be employed to generate the artificial intelligence model 116. The one or more training images 514 can be one or more images associated with one or more engineering components. For example, the one or more training images 514 can be one or more images associated with one or more mechanical components and/or one or more electrical components related to an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a blade for an aircraft, a combustion system, a medical device system, medical imaging system, and/or another system. In certain embodiments, an annotator device 516 can be employed to generate one or more annotations for the one or more training images 514. For example, the annotator device 516 can be a display device employed by a user to generate one or more annotations for the one or more training images 514. In one example, the annotator device 516 can correspond to the display device 304. In an aspect, the annotator device 516 can be a display device such as, but not limited to, a computing device, a computer, a desktop computer, a laptop computer, a monitor device, a smart device, a smart phone, a mobile device, a handheld device, a tablet device, a portable computing device, a wearable device, a virtual reality device or another type of display device associated with a user interface to facilitate generating generate one or more annotations for the one or more training images 514. In certain embodiments, the annotator device 516 can include the annotation component 104. The annotator device 516 can generate one or more annotated images 518. The one or more annotated images 504 can be one or more annotations for the set of images associated with the training data 114.

In yet another embodiment, a process 520 can be performed to determine whether a meta-model exists. For example, it can be determined whether an alternate model of an artificial intelligence model (e.g., an alternate model of the artificial intelligence model 116) exists. The alternate model can be a simplified version or a previous version of an artificial intelligence model (e.g., a simplified version or a previous version of the artificial intelligence model 116). If no, a process 522 can be performed to initiate training. For example, the process 522 can initiate a training process, a feature learning process and/or an annotation process associated with the active learning component 106. If yes, a process 524 can be performed to update a model with incremental learning or to discard a model if learning is not needed. For instance, the process 524 can update the meta-model with incremental learning associated with the active learning component 106 (e.g., the process 524 can update the meta-model with information associated with the artificial intelligence model 116 generated by the active learning component 106). Alternatively, the process 524 can discard the meta-model if learning is not needed. For instance, the process 524 can discard the meta-model in response to a determination that the meta-model corresponds to the artificial intelligence model 116 generated by the active learning component 106. In certain embodiments, after the process 524 is performed, the one or more annotated images 504 can be updated. For example, the one or more annotated images 518 can be stored on the server 502. In certain embodiments, a process 526 can be performed to provide feedback about quality of an annotation and/or to assist with pre-annotation. For example, the process 526 can be performed to provide feedback about quality of an annotation included in the one or more annotated images 518 generated by the annotator device 516. Additionally or alternatively, the process 526 can be performed to provide feedback to the annotator device 516 and to assist with pre-annotation of the one or more annotated images 518. In certain embodiments, a user can be provided with the prediction 510. For example, the prediction 510 can be provided to the display device 304 associated with a user. Additionally or alternatively, in certain embodiments, a user (e.g., a reviewer) can be provided the one or more annotated images 504 and/or can update one or more annotations associated with the one or more annotated images 504. For example, the one or more annotated images 504 can be provided to the display device 304 associated with a user (e.g., a reviewer). Additionally or alternatively, one or more annotations associated with the one or more annotated images 504 can be updated by a user (e.g., a reviewer) via the display device 304.

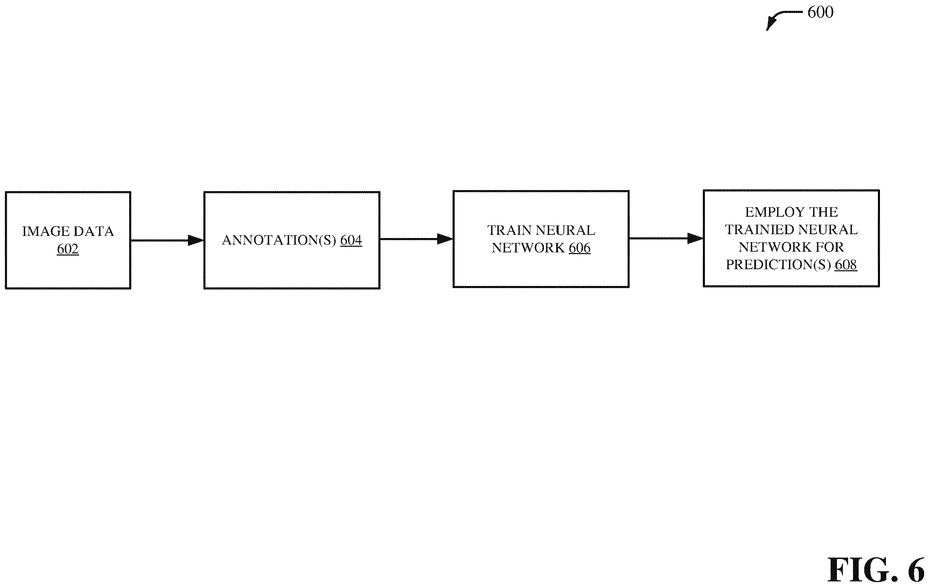

Referring now to FIG. 6, there is illustrated a non-limiting implementation of a system 600 in accordance with various aspects and implementations of this disclosure. Repetitive description of like elements employed in other embodiments described herein is omitted for sake of brevity. The system 600 includes image data 602. The image data 602 can include one or more images. For example, the image data 602 can include the set of images associated with the training data 114. In one example, the image data 602 can include one or more digital images. Furthermore, the image data 602 can be two-dimensional imaging data and/or three-dimensional imaging data generated by one or more imaging devices. For instance, the image data 602 can be imagery captured via a set of sensors (e.g., a set of sensors associated with an imaging device). Additionally or alternatively, the image data 602 can include one or more videos. In certain embodiments, the image data 602 can be a series of imagery captured via a set of sensors (e.g., a set of sensors associated with an imaging device) during an interval of time. The image data 602 can be received directly from one or more imaging devices. Alternatively, the image data 602 can be stored in one or more databases that receives and/or stores the image data 602. In an embodiment, the image data 602 can be one or more images associated with one or more engineering components. The one or more engineering components can be, for example, one or more mechanical components and/or one or more electrical components related to an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a blade for an aircraft, a combustion system, a medical device system, medical imaging system, and/or another system. In another non-limiting embodiment, the image data 602 can be medical imaging data. For example, the image data 602 can be two-dimensional medical imaging data and/or three-dimensional medical imaging data generated by one or more medical imaging devices. In example, the image data 602 can be electromagnetic radiation imagery captured via a set of sensors (e.g., a set of sensors associated with a medical imaging device). In certain embodiments, the image data 602 can be a series of electromagnetic radiation imagery captured via a set of sensors (e.g., a set of sensors associated with a medical imaging device) during an interval of time. In another example, the image data 602 can be PET scan imagery. In yet another example, the image data 602 can be MRI data. A medical imaging device can be, for example, an x-ray device, a CT device, a PET scanner device, an MRI device, another type of medical imaging device, etc.

One or more annotations 604 can be generated based on the image data 602. For example, the annotation component 104 can annotate the image data 602 to generate the one or more annotations 604. The one or more annotations 604 can be one or more image-level annotations and/or one or more pixel-level annotations for the image data 602. Additionally, the one or more annotations 604 can preparation of the image data 602 for use as a training data set. In an aspect, the one or more annotations 604 can annotate one or more regions of interest for the image data 602. The one or more annotations 604 can include a bounding box, a free-form shape and/or another type of annotation technique to annotate one or more portions of the image data 602. In an example, the one or more annotations 604 can label one or more pixels of the image data 602. In another example, the one or more annotations 604 can employ one or more masks to label one or more pixels of the image data 602. In another aspect, an annotation from the one or more annotations 604 can represent a pass label or a fail label. For instance, an annotation from the one or more annotations 604 can indicate whether or not an area of interest associated with the image data 602 includes a defect. For example, an annotation from the one or more annotations 604 can indicate whether an area of interest for an engineering component associated with the image data 602 is an area that includes a defect (e.g., a crack, etc.) or an area that is normal (e.g., without a defect). In certain embodiments, an annotation from the one or more annotations 604 can label (e.g., classify) an area of interest associated with the image data 602. A label associated with the one or more annotations 604 can be, for example, a first classification (e.g., a first classification label) or a second classification (e.g., a second classification label) associated with the image data 602. In one example, an annotation from the one or more annotations 604 can correspond to a "pass" label for one or more portions of the image data 602 or a "fail" label for the one or more portions of the image data 602.

In an embodiment, a process 606 can be performed to train a neural network. For example, the process 606 can be a training process to train an artificial intelligence model (e.g., the artificial intelligence model 116) associated with a neural network. The process 606 can train the neural network (e.g., the artificial intelligence model) based on the one or more annotations 604. In another embodiment, a process 608 can be performed to employ the trained neural network for one or more predictions associated with the image data 602. For example, the process 608 can be performed to employ the trained artificial intelligence model (e.g., the artificial intelligence model 116) associated with the trained neural network for one or more predictions associated with the image data 602. The one or more predictions associated with the image data 602 can be one or more predictions as to whether one or more areas of interest for the image data 602 includes a defect or not. For example, the one or more predictions associated with the image data 602 can predict whether one or more areas of interest for the image data 602 is an area that includes a defect (e.g., a crack, etc.) or an area that is normal (e.g., without a defect). In certain embodiments, the one or more predictions associated with the image data 602 can label (e.g., classify) an area of interest for the image data 602. The label associated with the one or more predictions for the image data 602 can be, for example, a first classification (e.g., a first classification label) or a second classification (e.g., a second classification label) for the image data 602. In one example, the one or more predictions associated with the image data 602 can provide a "pass" label prediction or a "fail" label prediction for one or more portions of the image data 602.

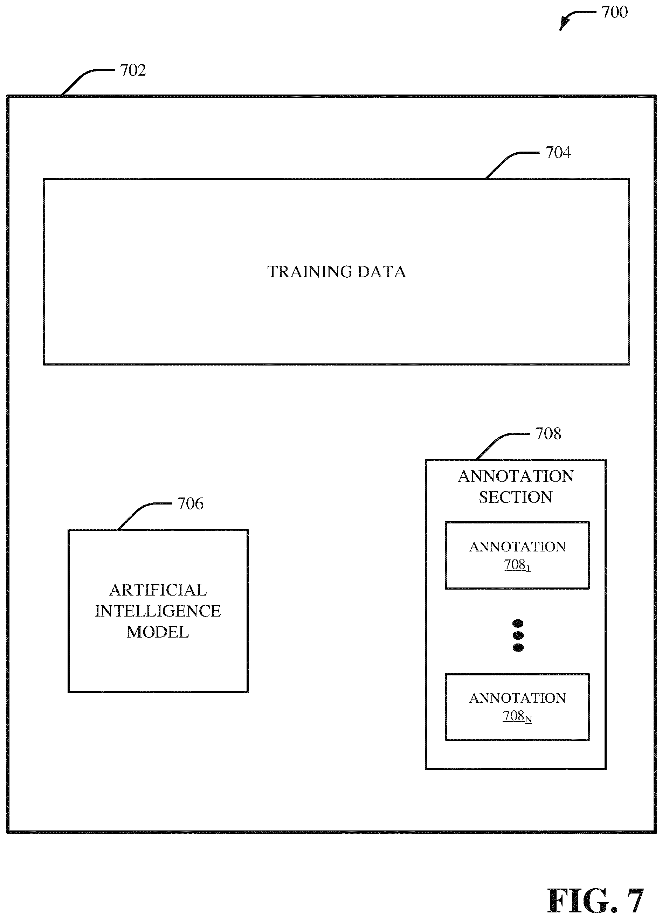

Referring now to FIG. 7, there is illustrated a non-limiting implementation of a system 700 in accordance with various aspects and implementations of this disclosure. Repetitive description of like elements employed in other embodiments described herein is omitted for sake of brevity. In an embodiment, the system 700 can be associated with the display component 202 and/or the display device 304. The system 700 illustrates an example user interface 702. The user interface 702 can be a graphical user interface that presents (e.g., displays) graphical elements and/or textual elements. For instance, in an embodiment, the user interface 702 can be a user interface of the display device 304. In one example, the user interface 702 can be associated with an Internet application (e.g., a cloud-based enterprise application). The user interface 702 can be presented on a display of a display device such as, but not limited to, a computing device, a computer, a desktop computer, a laptop computer, a monitor device, a smart device, a smart phone, a mobile device, a handheld device, a tablet device, a portable computing device, a wearable device, a virtual reality device or another type of display device capable of presenting the user interface 702. In an embodiment, the user interface 702 can present training data 704. The training data 704 can be associated with information included in the training data 114, for example. The training data 704 can be presented in a human interpretable format. For example, the training data 704 can be presented as one or more graphical elements and/or one or more textual elements such as, but not limited to, a notification, a message, an icon, a thumbnail, a dialog box, an interactive tool, a widget, a graph, another type of graphical element, or another type of textual element.

In another embodiment, the user interface 702 can additionally or alternatively present an artificial intelligence model 706. The artificial intelligence model 706 can be associated with the artificial intelligence model 116. For example, the artificial intelligence model 706 can correspond to the artificial intelligence model 116 and/or can present information associated with the artificial intelligence model 116. As such, the artificial intelligence model 706 can be an artificial intelligence model generated and/or updated by the active learning component 106. The artificial intelligence model 706 can be presented in a human interpretable format. For example, the artificial intelligence model 706 can be presented as one or more graphical elements and/or one or more textual elements such as, but not limited to, a notification, a message, an icon, a thumbnail, a dialog box, an interactive tool, a widget, a graph, another type of graphical element, or another type of textual element. In yet another embodiment, the user interface 702 can additionally or alternatively present an annotation section 708. The annotation section 708 can present information for one or more annotations 708_{1-N} associated with the training data 704 and/or the artificial intelligence model 706, where N is an integer. In one example, the one or more annotations 708_{1-N} can include one or more annotations generated by the annotation component 104. Additionally or alternatively, the one or more annotations 708_{1-N} can include one or more annotations generated by a user via the user interface 702. In certain embodiments, the annotation section 708 can additionally or alternatively provide information regarding quality, accuracy and/or performance of the one or more annotations 708_{1-N}. In certain embodiments, the user interface 702 can allow a user to view, analyze, and/or manage the training data 704, the artificial intelligence model 706, and/or the one or more annotations 708_{1-N} in real-time and/or in parallel to processing by the artificial intelligence component 102. It is to be appreciated that the user interface 702 is merely an example. Therefore, the location and/or content of the training data 704, the artificial intelligence model 706, and/or the one or more annotations 708_{1-N} can be varied. Furthermore, the user interface 702 can additionally or alternatively include other features, content and/or functionalities not shown in FIG. 7.

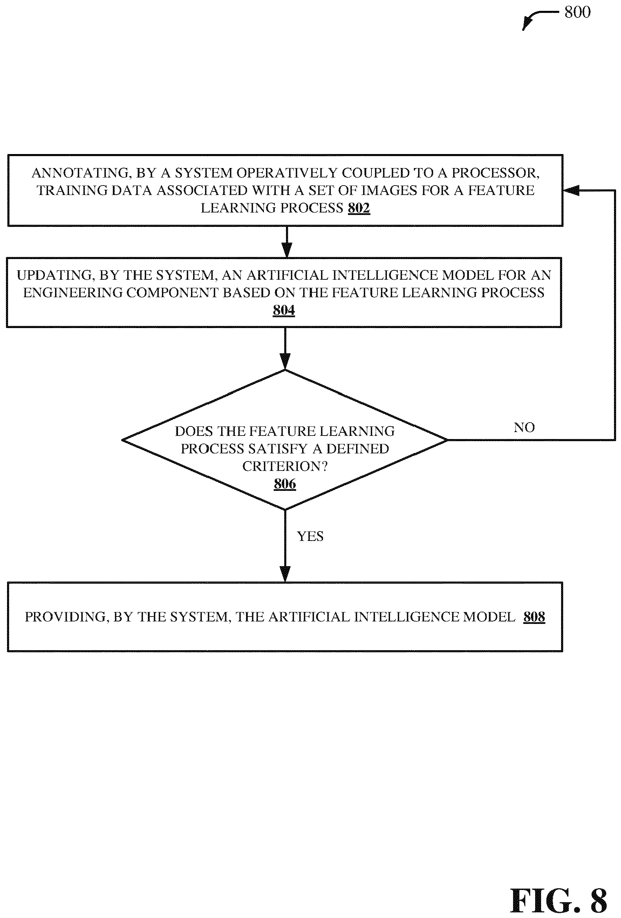

FIG. 8 illustrates a methodology and/or a flow diagram in accordance with the disclosed subject matter. For simplicity of explanation, the methodology is depicted and described as a series of acts. It is to be understood and appreciated that the subject innovation is not limited by the acts illustrated and/or by the order of acts, for example acts can occur in various orders and/or concurrently, and with other acts not presented and described herein. Furthermore, not all illustrated acts may be required to implement the methodology in accordance with the disclosed subject matter. In addition, those skilled in the art will understand and appreciate that the methodology could alternatively be represented as a series of interrelated states *via* a state diagram or events. Additionally, it should be further appreciated that methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device or storage media.

Referring to FIG. 8, there is illustrated a non-limiting implementation of a methodology 800 for providing an artificial intelligence based annotation framework with active learning for image analytics, according to one or more embodiments of the subject innovation. At 802, training data associated with a set of images for a feature learning process is annotated by a system operatively coupled to a processor (e.g., by annotation component 104). The training data can be, for example, a training set associated with a set of images for the feature learning process. In an embodiment, the training data can be employed to train an artificial intelligence network (e.g., an artificial intelligence model). For example, the training data can be employed to train a neural network associated with an artificial intelligence model. In certain embodiments, the training data can be associated with a set of weights from a pre-trained model. The set of images can include one or more digital images. The set of images can be two-dimensional imaging data and/or three-dimensional imaging data generated by one or more imaging devices. For instance, the set of images can be imagery captured via a set of sensors (e.g., a set of sensors associated with an imaging device). In certain embodiments, the set of images can be a series of imagery captured via a set of sensors (e.g., a set of sensors associated with an imaging device) during an interval of time. The set of images can be received directly from one or more imaging devices. Alternatively, the set of images can be stored in one or more databases that receives and/or stores the set of images. In an embodiment, the set of images can be a set of images associated with one or more engineering components. For example, the one or more engineering components can be one or more mechanical components and/or one or more electrical components related to an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a blade for an aircraft, a combustion system, a medical device system, medical imaging system, and/or another system. In an alternate embodiment, the set of images can be a set of images associated with medical imaging data.

In an embodiment, one or more portions of the training data can be annotated. For instance, the feature learning process can include an annotation process to facilitate learning one or more features associated with the set of images. Furthermore, the annotation process can be performed to label one or more portions of the set of images associated with the training data. In an aspect, one or more image-level annotations and/or one or more pixel-level annotations for the set of images associated with the training data can be generated. In another aspect, one or more regions of interest for the set of images associated with the training data can be annotated. In certain embodiments, an annotation can represent a pass label or a fail label for the one or more regions of interest. For instance, an annotation can indicate whether or not an area of interest for an engineering component includes a defect. For example, an annotation can indicate whether an area of interest for an engineering component is an area that includes a defect (e.g., a crack, etc.) or an area that is normal (e.g., without a defect). In certain embodiments, an annotation can label (e.g., classify) an area of interest for an image associated with the training data. A label can be, for example, a first classification (e.g., a first classification label) or a second classification (e.g., a second classification label). In one example, an annotation can correspond to a "pass" label for one or more portions of an image associated with the training data or a "fail" label for the one or more portions of the image.

At 804, an artificial intelligence model for an engineering component is incrementally updated, by the system (e.g., by active learning component 106), based on the feature learning process. For example, the artificial intelligence model can be incrementally updated based on one or more annotations for the set of images. In an aspect, the artificial intelligence model can be incrementally updated by repeatedly updating the artificial intelligence model during the annotation process. For instance, the artificial intelligence model can be updated two or more times during the annotation process. The artificial intelligence model can be an analytics artificial intelligence model, for example. Furthermore, in certain embodiments, the artificial intelligence model can be a training model to facilitate identifying one or more defects and/or one or more abnormalities in an image associated with the engineering component. The engineering component can include one or more mechanical components and/or one or more electrical components related to an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a combustion system, a medical device system, medical imaging system, and/or another system.

At 806, it is determined whether the feature learning process satisfies a defined criterion. For example, it can be determined whether the artificial intelligence model satisfied a defined criterion (e.g., whether the artificial intelligence model is sufficiently updated). If no, the methodology returns to 802. If yes, the methodology proceeds to 808.

At 808, the artificial intelligence model is provided by the system (e.g., by active learning component 106 and/or display component 202). In an embodiment, the artificial intelligence model can be provided to a system associated with the engineering component. For example, the artificial intelligence model can be employed by a system (e.g., an engineering system, a mechanical system, an electronics system, an asset system, a machine system, a device system, an equipment system, an aviation system, a power system, a distributed power system, an energy management system, a thermal management system, a transportation system, an oil and gas system, a heating system, an HVAC system, a medical system, an automobile system, an aircraft system, a water craft system, a water filtration system, a cooling system, a pump system, an engine system, a combustion system, a medical device system, medical imaging system, and/or another system). Additionally or alternatively, the artificial intelligence model can be provided to a display device. For example, the artificial intelligence model can be provided to a display device to display information associated with the artificial intelligence model in a human-interpretable format. Additionally or alternatively, the training data can be provided to a display device to display information associated with the training data in a human-interpretable format. Additionally or alternatively, one or more annotations associated with the training data can be provided to a display device to display information associated with the one or more annotations in a human-interpretable format. Additionally or alternatively, in certain embodiments, one or more annotations associated with the training data can be received from a display device associated with a user identity (e.g., via a user interface of the display device).

In certain embodiments, the methodology 800 can additionally or alternatively include communicating with a server that stores the artificial intelligence model. Furthermore, the training data can be annotated based on data associated with the artificial intelligence model stored by the server. In certain embodiments, the incrementally updating the artificial intelligence model can include performing a first modeling process associated with a first version of the artificial intelligence model and performing a second modeling process associated with a second version of the artificial intelligence model. Furthermore, the first version of the artificial intelligence model or the second version of the artificial intelligence model can be selected for storage by a server.

The aforementioned systems and/or devices have been described with respect to interaction between several components. It should be appreciated that such systems and components can include those components or sub-components specified therein, some of the specified components or sub-components, and/or additional components. Sub-components could also be implemented as components communicatively coupled to other components rather than included within parent components. Further yet, one or more components and/or sub-components may be combined into a single component providing aggregate functionality. The components may also interact with one or more other components not specifically described herein for the sake of brevity, but known by those of skill in the art.

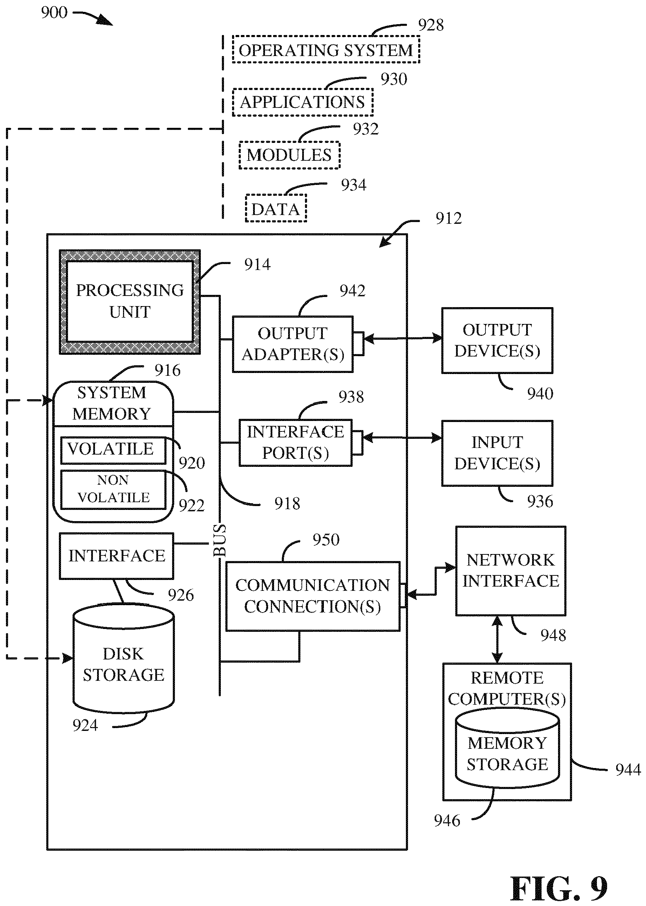

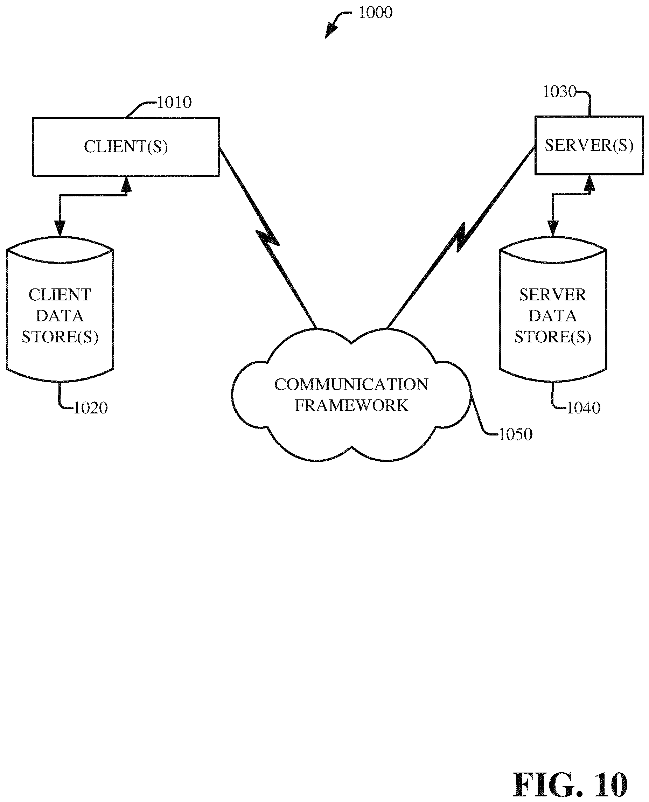

In order to provide a context for the various aspects of the disclosed subject matter, FIGS. 9 and 10 as well as the following discussion are intended to provide a brief, general description of a suitable environment in which the various aspects of the disclosed subject matter may be implemented.

With reference to FIG. 9, a suitable environment 900 for implementing various aspects of this disclosure includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable programmable ROM (EEPROM), flash memory, or nonvolatile random access memory (RAM) (e.g., ferroelectric RAM (FeRAM). Volatile memory 920 includes random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM

Computer 912 also includes removable/non-removable, volatile/nonvolatile computer storage media. FIG. 9 illustrates, for example, a disk storage 924. Disk storage 924 includes, but is not limited to, devices like a magnetic disk drive, floppy disk drive, tape drive, Jaz drive, Zip drive, LS-100 drive, flash memory card, or memory stick. The disk storage 924 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used, such as interface 926.

FIG. 9 also depicts software that acts as an intermediary between users and the basic computer resources described in the suitable operating environment 900. Such software includes, for example, an operating system 928. Operating system 928, which can be stored on disk storage 924, acts to control and allocate resources of the computer system 912. System applications 930 take advantage of the management of resources by operating system 928 through program modules 932 and program data 934, e.g., stored either in system memory 916 or on disk storage 924. It is to be appreciated that this disclosure can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 via interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912, and to output information from computer 912 to an output device 940. Output adapter 942 is provided to illustrate that there are some output devices 940 like monitors, speakers, and printers, among other output devices 940, which require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected via communication connection 950. Network interface 948 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

FIG. 10 is a schematic block diagram of a sample-computing environment 1000 with which the subject matter of this disclosure can interact. The system 1000 includes one or more client(s) 1010. The client(s) 1010 can be hardware and/or software (e.g., threads, processes, computing devices). The system 1000 also includes one or more server(s) 1030. Thus, system 1000 can correspond to a two-tier client server model or a multi-tier model (e.g., client, middle tier server, data server), amongst other models. The server(s) 1030 can also be hardware and/or software (e.g., threads, processes, computing devices). The servers 1030 can house threads to perform transformations by employing this disclosure, for example. One possible communication between a client 1010 and a server 1030 may be in the form of a data packet transmitted between two or more computer processes.

The system 1000 includes a communication framework 1050 that can be employed to facilitate communications between the client(s) 1010 and the server(s) 1030. The client(s) 1010 are operatively connected to one or more client data store(s) 1020 that can be employed to store information local to the client(s) 1010. Similarly, the server(s) 1030 are operatively connected to one or more server data store(s) 1040 that can be employed to store information local to the servers 1030.

It is to be noted that aspects or features of this disclosure can be exploited in substantially any wireless telecommunication or radio technology, e.g., Wi-Fi; Bluetooth; Worldwide Interoperability for Microwave Access (WiMAX); Enhanced General Packet Radio Service (Enhanced GPRS); Third Generation Partnership Project (3GPP) Long Term Evolution (LTE); Third Generation Partnership Project 2 (3GPP2) Ultra Mobile Broadband (UMB); 3GPP Universal Mobile Telecommunication System (UMTS); High Speed Packet Access (HSPA); High Speed Downlink Packet Access (HSDPA); High Speed Uplink Packet Access (HSUPA); GSM (Global System for Mobile Communications) EDGE (Enhanced Data Rates for GSM Evolution) Radio Access Network (GERAN); UMTS Terrestrial Radio Access Network (UTRAN); LTE Advanced (LTE-A); etc. Additionally, some or all of the aspects described herein can be exploited in legacy telecommunication technologies, e.g., GSM. In addition, mobile as well non-mobile networks (e.g., the Internet, data service network such as internet protocol television (IPTV), etc.) can exploit aspects or features described herein.

While the subject matter has been described above in the general context of computer-executable instructions of a computer program that runs on a computer and/or computers, those skilled in the art will recognize that this disclosure also can or may be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices (e.g., PDA, phone), microprocessor-based or programmable consumer or industrial electronics, and the like. The illustrated aspects may also be practiced in distributed computing environments where tasks are performed by remote processing devices that are linked through a communications network. However, some, if not all aspects of this disclosure can be practiced on stand-alone computers. In a distributed computing environment, program modules may be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

In another example, respective components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

Various aspects or features described herein can be implemented as a method, apparatus, system, or article of manufacture using standard programming or engineering techniques. In addition, various aspects or features disclosed in this disclosure can be realized through program modules that implement at least one or more of the methods disclosed herein, the program modules being stored in a memory and executed by at least a processor. Other combinations of hardware and software or hardware and firmware can enable or implement aspects described herein, including a disclosed method(s). The term "article of manufacture" as used herein can encompass a computer program accessible from any computer-readable device, carrier, or storage media. For example, computer readable storage media can include but are not limited to magnetic storage devices (e.g., hard disk, floppy disk, magnetic strips...), optical discs (e.g., compact disc (CD), digital versatile disc (DVD), blu-ray disc (BD) ...), smart cards, and flash memory devices (e.g., card, stick, key drive...), or the like.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor may also be implemented as a combination of computing processing units.

In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory.

By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or methods herein are intended to include, without being limited to including, these and any other suitable types of memory.

It is to be appreciated and understood that components, as described with regard to a particular system or method, can include the same or similar functionality as respective components (e.g., respectively named components or similarly named components) as described with regard to other systems or methods disclosed herein.

What has been described above includes examples of systems and methods that provide advantages of this disclosure. It is, of course, not possible to describe every conceivable combination of components or methods for purposes of describing this disclosure, but one of ordinary skill in the art may recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

Further aspects of the invention are provided by the subject matter of the following clauses:
1. A system, comprising:
   a memory that stores computer executable components; and
   a processor that executes the computer executable components stored in the memory, wherein the computer executable components comprise:
      an annotation component that annotates training data associated with a set of images for a feature learning process; and
      an active learning component that incrementally updates an analytics artificial intelligence model for an engineering component based on the feature learning process.
2. The system of any preceding clause, wherein the active learning component is in communication with a server component that stores the analytics artificial intelligence model.
3. The system of any preceding clause, wherein the annotation component annotates the training data based on data associated with the analytics artificial intelligence model stored by the server component.
4. The system of any preceding clause, wherein the active learning component is implemented on a server.
5. The system of any preceding clause, wherein the active learning component incrementally updates the analytics artificial intelligence model via a first modeling process, and wherein the first modeling process simultaneously updates the analytics artificial intelligence model with respect to a second modeling process that incrementally updates the analytics artificial intelligence model.
6. The system of any preceding clause, wherein the active learning component selects, for storage in a data store associated with a server, a first version of the analytics artificial intelligence model associated with the first modeling process or a second version of the analytics artificial intelligence model associated with the second modeling process.
7. The system of any preceding clause, wherein the computer executable
   components comprise:
   a display component that provides the training data to a display device to display information associated with the training data in a human-interpretable format.
8. A method, comprising using a processor operatively coupled to memory to execute computer executable components to perform the following acts:
   annotating training data associated with a set of images for a feature learning process; and
   incrementally updating an artificial intelligence model for an engineering component based on the feature learning process.
9. The method of any preceding clause, further comprising providing the artificial intelligence model to a system associated with the engineering component.
10. The method of any preceding clause, further comprising providing the artificial intelligence model to a display device to display information associated with the artificial intelligence model in a human-interpretable format.
11. The method of any preceding clause, further comprising receiving one or more annotations associated with the training data from a display device associated with a user identity.
12. The method of any preceding clause, further comprising communicating with a server that stores the artificial intelligence model.
13. The method of any preceding clause, wherein the annotating the training data comprises annotating the training data based on data associated with the artificial intelligence model stored by the server.
14. The method of any preceding clause, wherein the incrementally updating the artificial intelligence model comprises performing a first modeling process associated with a first version of the artificial intelligence model and performing a second modeling process associated with a second version of the artificial intelligence model.
15. The method of any preceding clause, further comprising selecting the first version of the artificial intelligence model or the second version of the artificial intelligence model for storage by a server.
16. A computer readable storage device comprising instructions that, in response to execution, cause a system comprising a processor to perform operations, comprising:
   annotating training data associated with a set of images for a feature learning process;
   incrementally updating an artificial intelligence model for an engineering component based on the feature learning process; and
   providing the artificial intelligence model to a display device to display information associated with the artificial intelligence model in a human-interpretable format.
17. The computer readable storage device of any preceding clause, wherein the operations further comprise communicating with a server that stores the artificial intelligence model.
18. The computer readable storage device of any preceding clause, wherein the annotating the training data comprises annotating the training data based on data associated with the artificial intelligence model stored by the server.
19. The computer readable storage device of any preceding clause, wherein the incrementally updating the artificial intelligence model comprises performing a first modeling process associated with a first version of the artificial intelligence model and performing a second modeling process associated with a second version of the artificial intelligence model.
20. The computer readable storage device of any preceding clause, further comprising selecting the first version of the artificial intelligence model or the second version of the artificial intelligence model for storage by a server.

## Claims

1. A system, comprising:
a memory that stores computer executable components; and
a processor that executes the computer executable components stored in the memory, wherein the computer executable components comprise:
an annotation component that annotates training data associated with a set of images for a feature learning process; and
an active learning component that incrementally updates an analytics artificial intelligence model for an engineering component based on the feature learning process.

2. The system of claim 1, wherein the active learning component is in communication with a server component that stores the analytics artificial intelligence model.

3. The system of claim 2, wherein the annotation component annotates the training data based on data associated with the analytics artificial intelligence model stored by the server component.

4. The system of any of claims 1 to 3, wherein the active learning component is implemented on a server.

5. The system of any of claims 1 to 4, wherein the active learning component incrementally updates the analytics artificial intelligence model via a first modeling process, and wherein the first modeling process simultaneously updates the analytics artificial intelligence model with respect to a second modeling process that incrementally updates the analytics artificial intelligence model.

6. The system of claim 5, wherein the active learning component selects, for storage in a data store associated with a server, a first version of the analytics artificial intelligence model associated with the first modeling process or a second version of the analytics artificial intelligence model associated with the second modeling process.

7. The system of any of claims 1 to 6, wherein the computer executable
components comprise:
a display component that provides the training data to a display device to display information associated with the training data in a human-interpretable format.

8. A method, comprising using a processor operatively coupled to memory to execute computer executable components to perform the following acts:
annotating training data associated with a set of images for a feature learning process; and
incrementally updating an artificial intelligence model for an engineering component based on the feature learning process.

9. The method of claim 8, further comprising providing the artificial intelligence model to a system associated with the engineering component.

10. The method of claim 8 or 9, further comprising providing the artificial intelligence model to a display device to display information associated with the artificial intelligence model in a human-interpretable format.

11. The method of any of claims 8 to 10, further comprising receiving one or more annotations associated with the training data from a display device associated with a user identity.

12. The method of an of claims 8 to 11, further comprising communicating with a server that stores the artificial intelligence model.

13. The method of claim 12, wherein the annotating the training data comprises annotating the training data based on data associated with the artificial intelligence model stored by the server.

14. The method of any of claims 8 to 13, wherein the incrementally updating the artificial intelligence model comprises performing a first modeling process associated with a first version of the artificial intelligence model and performing a second modeling process associated with a second version of the artificial intelligence model.

15. A computer readable storage device comprising instructions that, in response to execution, cause a system comprising a processor to perform operations, comprising:
annotating training data associated with a set of images for a feature learning process;
incrementally updating an artificial intelligence model for an engineering component based on the feature learning process; and
providing the artificial intelligence model to a display device to display information associated with the artificial intelligence model in a human-interpretable format.
